(19) Europäisches Patentamt
European Patent Office
Office européen des brevets

(11) EP 1 375 568 A1

(12) EUROPÄISCHE PATENTANMELDUNG

(43) Veröffentlichungstag:
**02.01.2004 Patentblatt 2004/01**

(51) Int Cl.7: **C08G 77/445**, C08G 63/695

(21) Anmeldenummer: **02013771.7**

(22) Anmeldetag: **21.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Goldschmidt AG**
**45127 Essen (DE)**

(72) Erfinder:
- **Busch, Stefan**
  **44791 Bochum (DE)**
- **Karminski, Hans-Leo**
  **45134 Essen (DE)**
- **Oestreich, Sascha, Dr.**
  **45279 Essen (DE)**
- **Silber, Stefan, Dr.**
  **47804 Krefeld (DE)**

(54) **Neuartige Polyester-modifizierte Polysiloxane**

(57) Gegenstand der Erfindung sind Polyester-modifizierte Polysiloxane der allgemeinen Formel (I)

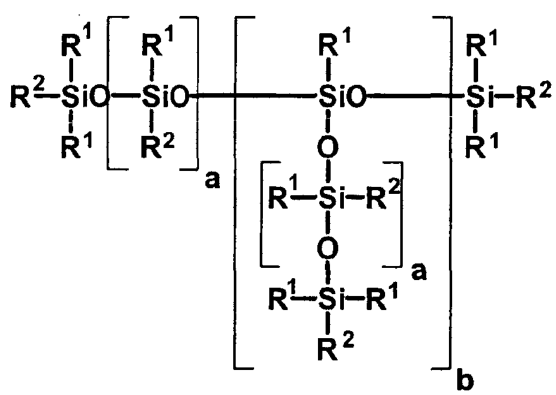

(I)

$R^1$ im Molekül gleich oder verschieden ist und Alkylreste mit 1 bis 4 Kohlenstoffatomen bedeutet,
$R^2$ folgende Bedeutung hat

a) Alkylreste mit 1 bis 24 Kohlenstoffatomen, gegebenenfalls substituierte Aryl- oder Aralkylreste mit bis zu 24 Kohlenstoffatomen,
und/oder
b) unabhängig voneinander ein Rest der Formel

$$-C_nH_{2n}-O-R^3-(R^4)_m$$

ist, wobei

$R^3$ ein gegebenenfalls Etherbrücken enthaltender linearer, cyclischer, aromatischer und/oder verzweigter Kohlenwasserstoffrest mit 1 bis 20 Kohlenstoffatomen ist,
und

EP 1 375 568 A1

$R^4$ eine aliphatische und/oder cycloaliphatische und/oder aromatische (Poly-)estergruppe ist, die durchschnittlich mehr als eine Gruppe der Formel

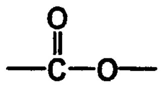 und/oder 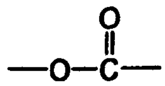

enthält,

wobei

n = 2 bis 10

m = 2 bis 10

ist,

a einen Wert von 1 bis 1000 und
b einen Wert von 0 bis 10 hat,

mit der Maßgabe, dass im durchschnittlichen Molekül mindestens ein Rest $R^2$ die Bedeutung b) hat und deren Verwendung als Gleit-, Netz-, Verlauf- und/oder Releaseadditive in Beschichtungs-, Druckfarben- und/oder Drucklackformulierungen.

## Beschreibung

Gegenstand der Erfindung sind neuartige Polyester-modifizierte Polysiloxane und deren Verwendung als Additive in Beschichtungen, insbesondere Druckfarben und Drucklacken.

Polyester-modifizierte Polysiloxane und deren Verwendung als Additive in Beschichtungen, Druckfarben, Drucklacken und/oder Formmassen sind bekannt und beispielsweise in EP-A-1 035 153, EP-A-0 175 092 und DE-A-35 35 283 beschrieben.

Nachteil dieser Verbindungsklasse ist jedoch, dass die Produkte in der Regel Feststoffe darstellen, deren Einarbeitung in die jeweiligen Formulierungen daher nicht unproblematisch ist. Um dem Anwender die Handhabbarkeit dieser Verbindungen zu erleichtern, werden Polyester-modifizierte Polysiloxane oft gelöst in organischen Lösemitteln, wie zum Beispiel Toluol oder Xylol, angeboten. Zum Beispiel enthalten die Polyester-modifizierten Polysiloxan-Produkte Tego® Glide 422 von der Firma Tego Chemie Service GmbH und BYK® 310 von der Firma BYK Chemie GmbH Xylol als Lösemittel.

Die Verwendung von organischen Lösemitteln stellt jedoch einen Nachteil dar. Insbesondere bei Anwendungen im Bereich der Beschichtungen, Druckfarben und Drucklacken führen die verwendeten Lösemittel zu Geruchsbelästigungen und Beeinträchtigungen beim Arbeitsablauf. Der Anteil der flüchtigen, organischen Verbindungen in der Atemluft wird durch die verdunstenden Lösemittel erhöht (VOC, "volatile organic compounds"). Entsprechende Absaugvorrichtungen müssen installiert werden, die hohe Investitionskosten verursachen.

Wünschenswert sind demzufolge Polyester-modifizierte Polysiloxane, die bei Raumtemperatur flüssig sind oder zumindest einen niedrigen Schmelzpunkt aufweisen und sich leicht in Formulierungen für Beschichtungen, Druckfarben und/oder Drucklacke einarbeiten lassen und gleichzeitig einen ähnlich hohen Gehalt an Polyestergruppen aufweisen wie Polyester-modifizierte Polysiloxane, die dem Stand der Technik entsprechen, um die Verträglichkeit mit den Beschichtungs-, Druckfarben- und/oder Drucklackformulierungen zu gewährleisten.

Überraschenderweise wurde nun gefunden, dass vorgenannte Aufgabe gelöst wird durch Polyester-modifizierte Polysiloxane der allgemeinen Formel (I)

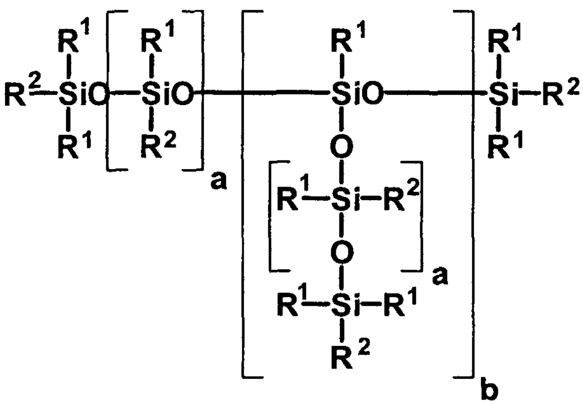

(I)

worin

$R^1$ im Molekül gleich oder verschieden ist und Alkylreste mit 1 bis 4 Kohlenstoffatomen bedeutet,

$R^2$ folgende Bedeutung hat

a) Alkylreste mit 1 bis 24 Kohlenstoffatomen, gegebenenfalls substituierte Aryl- oder Aralkylreste mit bis zu 24 Kohlenstoffatomen,
und/oder
b) unabhängig voneinander ein Rest der Formel

$$-C_nH_{2n}-O-R^3-(R^4)_m$$

ist, wobei

$R^3$ ein gegebenenfalls Etherbrücken enthaltender linearer, cyclischer, aromatischer und/oder verzweigter Kohlenwasserstoffrest mit 1 bis 20 Kohlenstoffatomen ist, und

$R^4$ eine aliphatische und/oder cycloaliphatische und/oder aromatische (Poly-)estergruppe ist, die durchschnittlich mehr als eine Gruppe der Formel

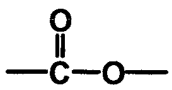

und/oder

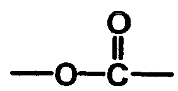

enthält,

wobei

n = 2 bis 10
m = 2 bis 10

ist,

a einen Wert von 1 bis 1000 und
b einen Wert von 0 bis 10 hat,
mit der Maßgabe, dass im durchschnittlichen Molekül mindestens ein Rest $R^2$ die Bedeutung b) hat.

Ein weiterer Gegenstand der Erfindung sind Verbindungen der Formel

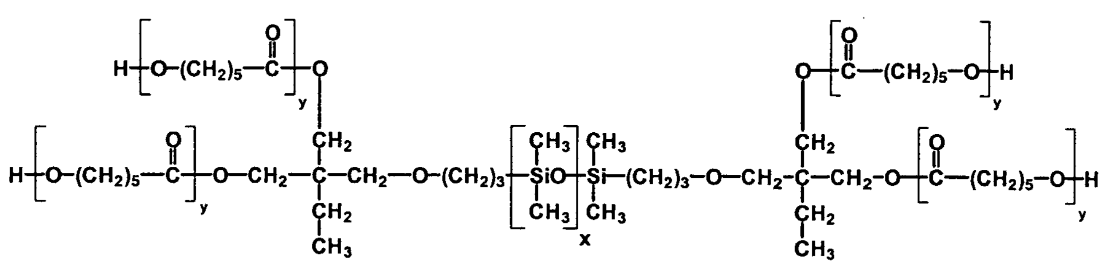

mit

x = 1 bis 100 und
y = 1,1 bis 10.

Ein weiterer Gegenstand der Erfindung sind Verbindungen der Formel

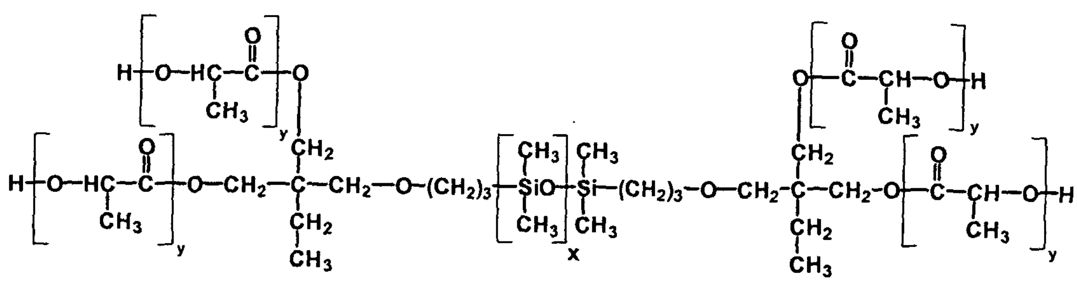

mit

x = 1 bis 100 und
y = 1,1 bis 10.

Ein weiterer Gegenstand der Erfindung sind Verbindungen der Formel

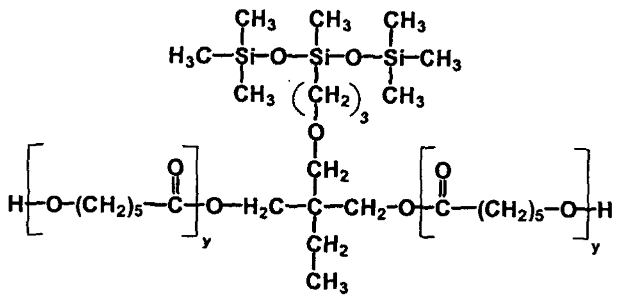

mit

y = 1,1 bis 10.

Ein weiterer Gegenstand der Erfindung sind Verbindungen der Formel

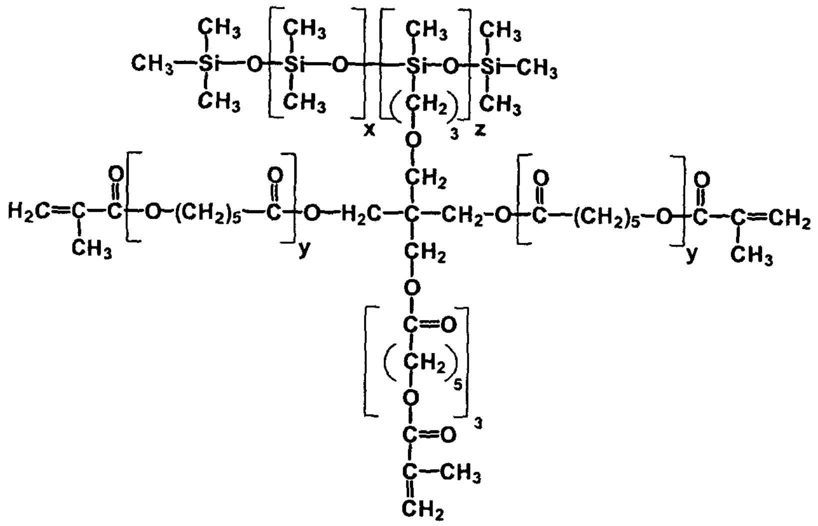

mit

x = 1 bis 100,
y = 1,1 bis 10 und
z = 1 bis 10.

Ein weiterer Gegenstand der Erfindung sind Verbindungen der Formel

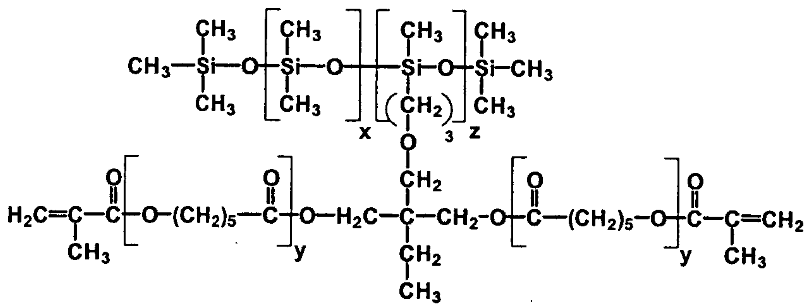

mit

x = 1 bis 100,
y = 1,1 bis 10 und
z = 1 bis 10.

Ein weiterer Gegenstand der Erfindung sind Verbindungen der Formel

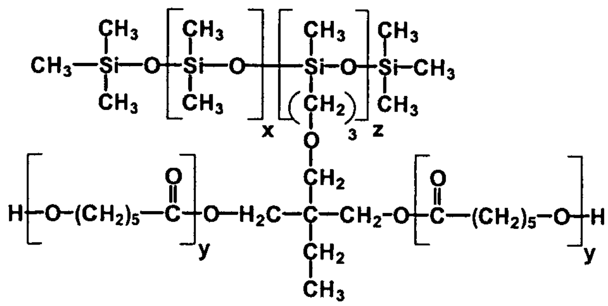

mit

x = 1 bis 100,
y = 1,1 bis 10 und
z = 1 bis 10.

Ein weiterer Gegenstand der Erfindung ist die Verwendung der erfindungsgemäßen Polyester-modifizierten Polysiloxane als Gleit-, Netz-, Verlauf- und/oder Releaseadditive in Beschichtungs-, Druckfarben- und/oder Drucklackformulierungen.

Beispiele für den Rest $R^1$ sind Alkylreste mit 1 bis 4 Kohlenstoffatomen, wie Methyl-, Ethyl-, Propyl-, iso-Propyl-, und/oder Butylreste. Besonders bevorzugt sind Methylreste.

Beispiele für den Rest $R^2$ mit der Bedeutung a) sind Alkylreste mit 1 bis 24 Kohlenstoffatomen, wie der Methyl-, Ethyl-, Propyl-, iso-Propyl-, Butyl-, Hexyl-, Octyl-, Decyl-, Dodecyl-, Hexadecyl- und Octadecylrest. Beispiele für gegebenenfalls substituierte Aryl- oder Aralkylreste mit bis zu 24 Kohlenstoffatomen, sind der Phenyl-, Benzyl-, Toluyl- oder Phenethylrest. Besonders bevorzugt sind Methyl- und Phenylreste.

Beispiele für den Rest $R^2$ mit der Bedeutung b) sind Reste der Formel $-C_nH_{2n}-O-R^3-(R^4)_{m,}$ wie

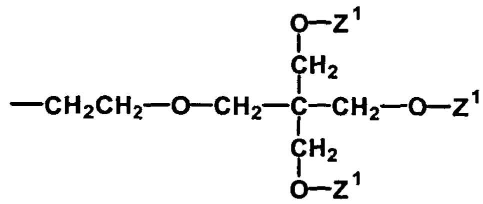

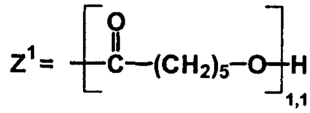

,

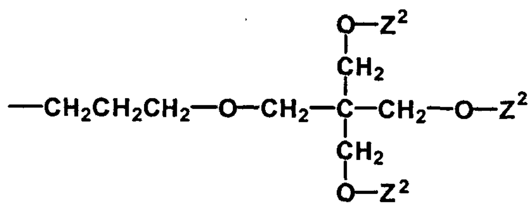

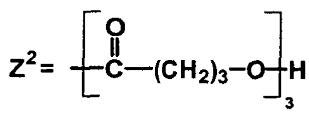

,

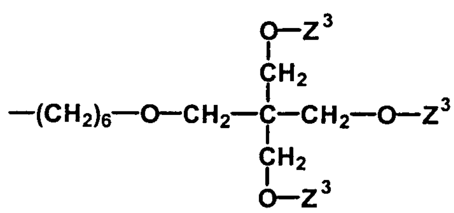

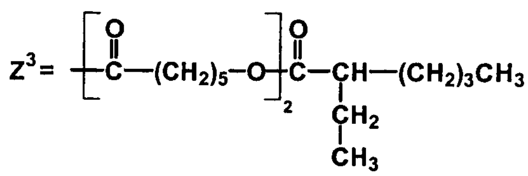

,

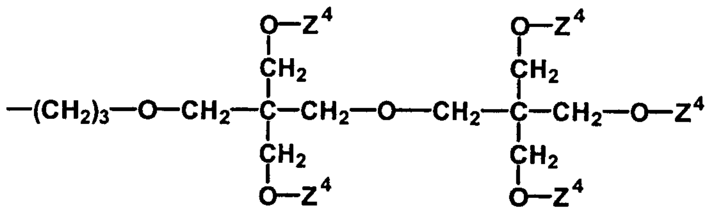

$Z^4$ = 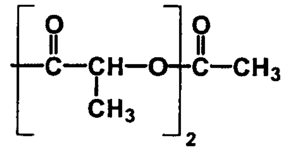,

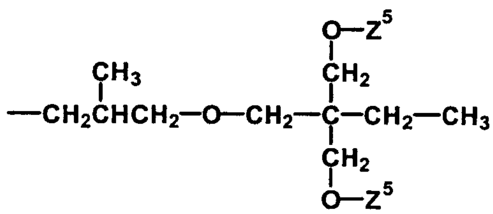

$Z^5$ = 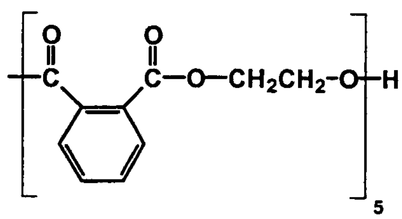,

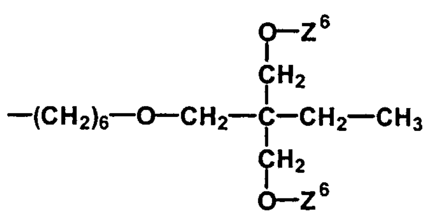

$Z^6$ = 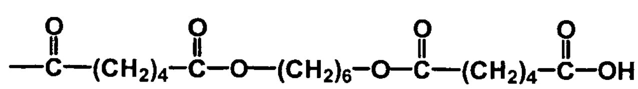,

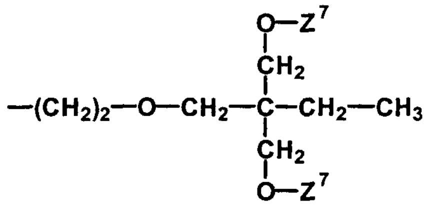

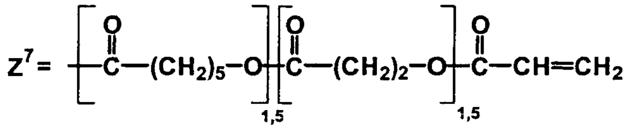

,

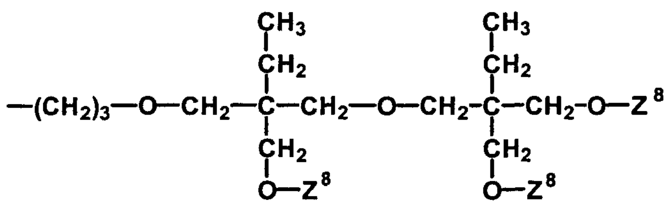

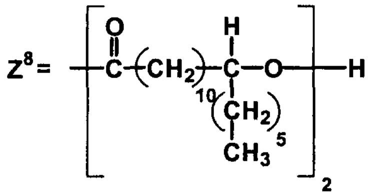

,

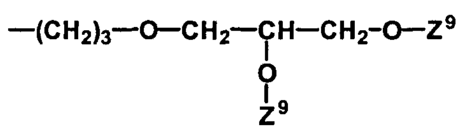

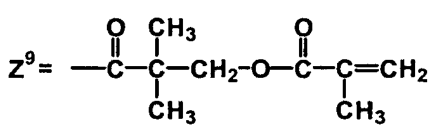

,

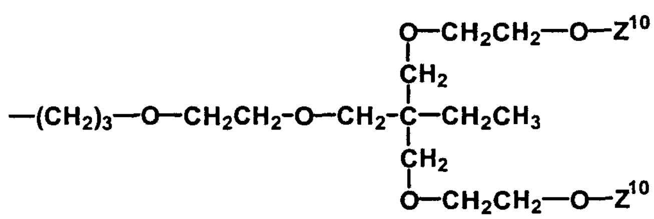

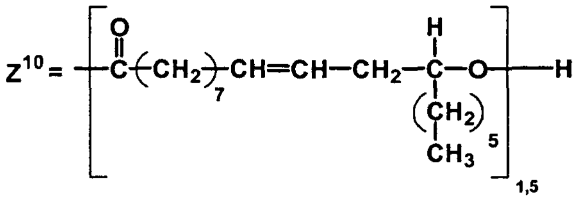

,

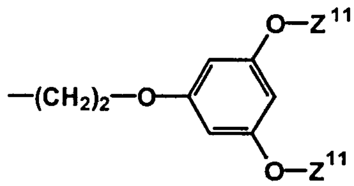

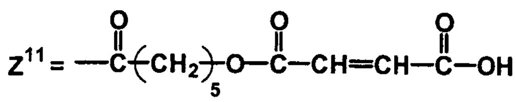

,

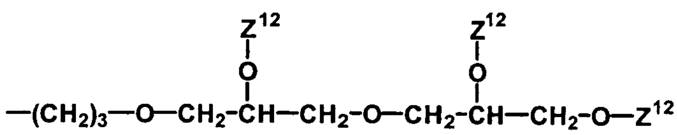

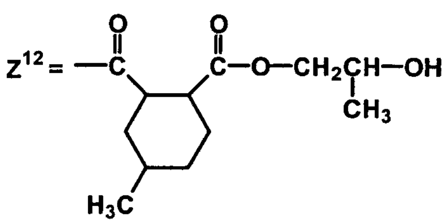

,

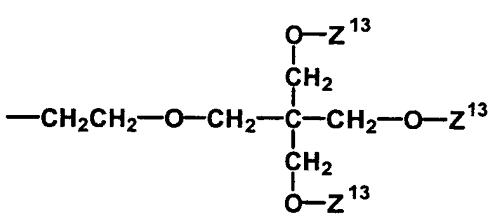

$Z^{13}$ = 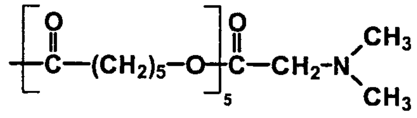

und

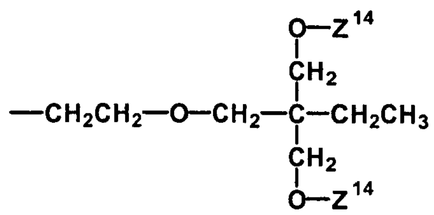

$Z^{14}$ = 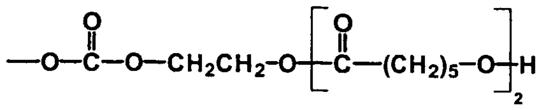.

Innerhalb des Restes $R^4$ können die (Poly-)estersegmente (Z) untereinander verschieden sein, weiterhin kann die Reihenfolge der einzelnen (Poly-)estersegmente beliebig sein und umfasst insbesondere Blockcopolymere, statistische Polymere sowie deren Kombinationen.

In einer bevorzugten Ausführungsform der vorliegenden Erfindung ist der Rest $R^3$, ein gegebenenfalls Etherbrücken enthaltender linearer, cyclischer, aromatischer und/oder verzweigter Kohlenwasserstoffrest mit 1 bis 20 Kohlenstoffatomen, ausgewählt aus der Reihe

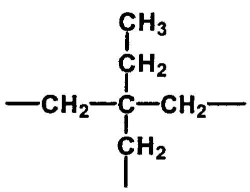,
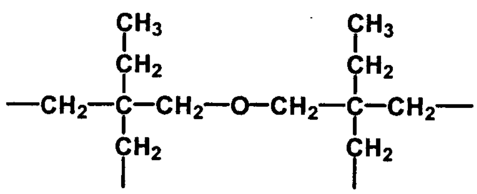,
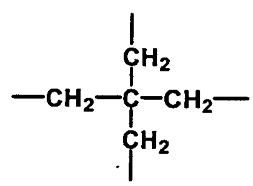,

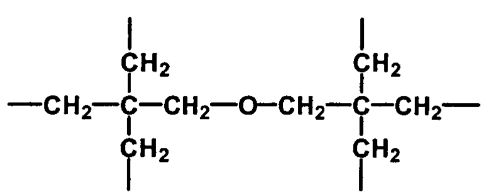.

In einer bevorzugten Ausführungsform der vorliegenden Erfindung ist der Rest $R^4$, eine aliphatische und/oder cycloaliphatische und/oder aromatische (Poly-)estergruppe, die durchschnittlich mehr als eine Gruppe der Formel

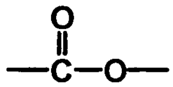 und/oder 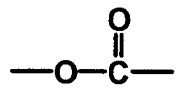

enthält, dessen mittleres Molekulargewicht $M_n$ einen Wert von 100 bis 5.000 g/mol aufweist. Besonders bevorzugt ist ein Wert von $M_n$ = 100 bis 2.000 g/mol.

In einer besonders bevorzugten Ausführungsform der vorliegenden Erfindung ist der Rest $R^4$ dadurch gekennzeichnet, dass die (Poly-)estergruppe $R^4$ durch ringöffnende Polymerisation aus Lactonen, wie zum Beispiel β-Propiolacton, 3,6-Dimethyl-1,4-dioxan-2,5-dion, γ-Valerolacton, ε-Caprolacton und/oder Dodecanlacton und/oder deren substituierten Varianten aufgebaut ist.

In einer bevorzugten Ausführungsform der vorliegenden Erfindung sind die Polyester-modifizierten Polysiloxane dadurch gekennzeichnet, dass

a einen Wert von 1 bis 500, insbesondere 1 bis 100,
b einen Wert von 0 bis 10, insbesondere 0 bis 5,
n einen Wert von 2 bis 8, insbesondere 2 bis 3 und
m einen Wert von 2 bis 6, insbesondere 2 bis 3 hat.

Es ist dem Fachmann geläufig, dass die Verbindungen aufgrund ihrer polymeren Natur in Form eines Gemisches mit einer im wesentlichen durch statistische Gesetze geregelten Verteilung vorliegen. Die Werte für die Indices a, b stellen deshalb Mittelwerte dar.

Beschichtungen, Druckfarben und/oder Drucklacke im Sinne der vorliegenden Erfindung können verschiedene Produkte sein. Es können zum Beispiel Klarlacke, pigmentierte oder Farbstoffe enthaltende Systeme sein. Als flüssige Phase können sie organische Lösemittel und/oder Wasser enthalten, wie dies in Abhängigkeit von den verwendeten Bindemitteln als Stand der Technik bekannt ist. Die Beschichtungen, Druckfarben und/oder Drucklacke müssen jedoch nicht notwendigerweise eine flüssige Phase enthalten, sondern können auch sogenannte Pulverlacke sein. Ebenso können die Beschichtungen, Druckfarben und/oder Drucklacke die üblichen dem Stand der Technik entsprechenden Zusatzstoffe enthalten, wie zum Beispiel Netz- und Dispergiermittel, Füllstoffe, Entschäumer, UV-Filter etc. und nach unterschiedlichen, dem Stand der Technik gemäßen Verfahren aushärten bzw. trocknen.

Die erfindungsgemäßen Polyester-modifizierten Polysiloxane können in Beschichtungen, Druckfarben und/oder Drucklacken in einer Konzentration von 0,01 bis 10,0 Gew.-% vorzugsweise von 0,5 bis 2 Gew.-% enthalten sein.

Herstellungsbeispiele:

Allgemeine Herstellvorschrift für die erfindungsgemäßen Beispiele:

In einem 2-l-Dreihalskolben, der mit einem Rührer, Intensivkühler, Thermometer und Tropftrichter ausgerüstet ist, werden 1.148 g eines hydroxyfunktionellen Polysiloxans mit folgender durchschnittlicher Struktur

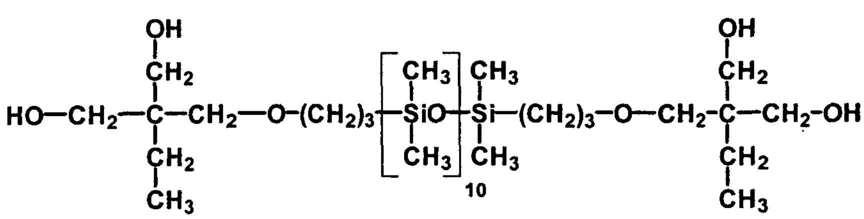

und einer OH-Zahl von 3,15 mmol OH/g eingewogen. Das Polysiloxan wird unter Rühren auf 145 °C aufgeheizt. In das Reaktionsgefäß wird ein Stickstoffstrom geleitet. Beim Erreichen der Reaktionstemperatur wird ein Gemisch aus 685 g ε-Caprolacton und 4 g eines Zinn-Octoat-Katalysators, der unter dem Handelsnamen Kosmos® 29 von der Goldschmidt AG erhältlich ist, zugetropft. Eine Temperatur von 150 °C sollte während der exothermen Reaktion nicht überschritten werden. Nach dem Ende des Zutropfens wird noch 1 h bei 145 °C gerührt. Zur Entfernung der flüchtigen Bestandteile wird anschließend bei 130 °C im ölpumpenvakuum 1 h destilliert. Man erhält ein flüssiges, bernsteinfarbenes Produkt mit einer Viskosität von 3.500 mPas (25 °C, Brookfield).

Weitere Beispiele für die Verknüpfung von Polyestern mit hydroxyfunktionellen Siloxanen sind zum Beispiel in EP-A-1 035 153 enthalten und können entsprechend auf die Synthese der erfindungsgemäßen, Polyester-modifizierten Polysiloxane angewandt werden.

Ausführungsbeispiele:

Die Erfindung wird nachfolgend anhand von Ausführungsbeispielen näher erläutert. Dazu werden die erfindungsgemäßen Verbindungen 1 bis 6 und die folgenden nicht erfindungsgemäßen Vergleichsbeispiele 1 bis 6 verwendet.

Beispiele für erfindungsgemäße mit Polyester-modifizierten Polysiloxane sind Produkte mit den folgenden, durchschnittlichen Strukturen:

Verbindung 1

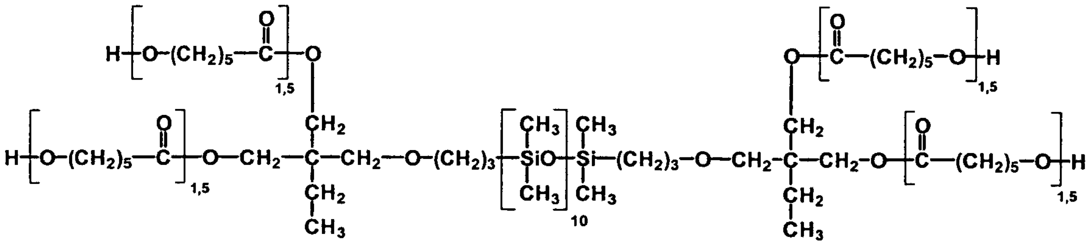

Verbindung 2

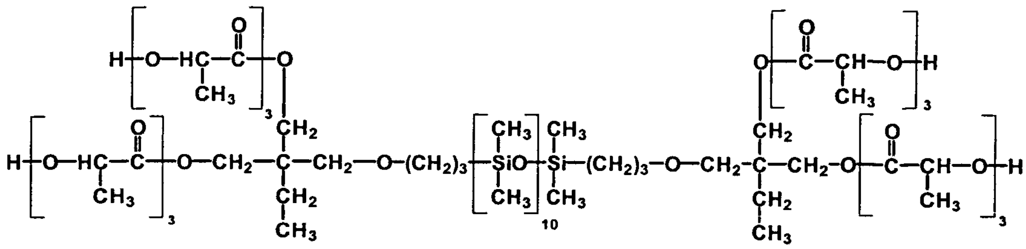

Verbindung 3

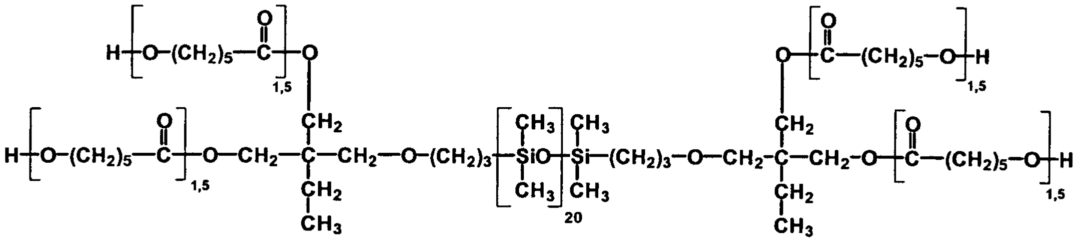

Verbindung 4

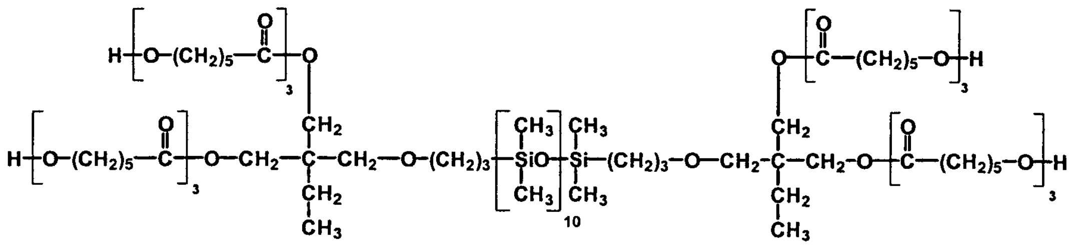

Verbindung 5

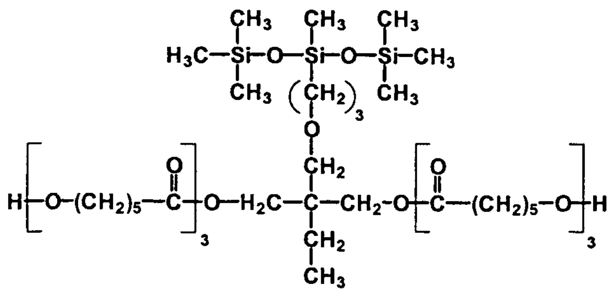

Verbindung 6

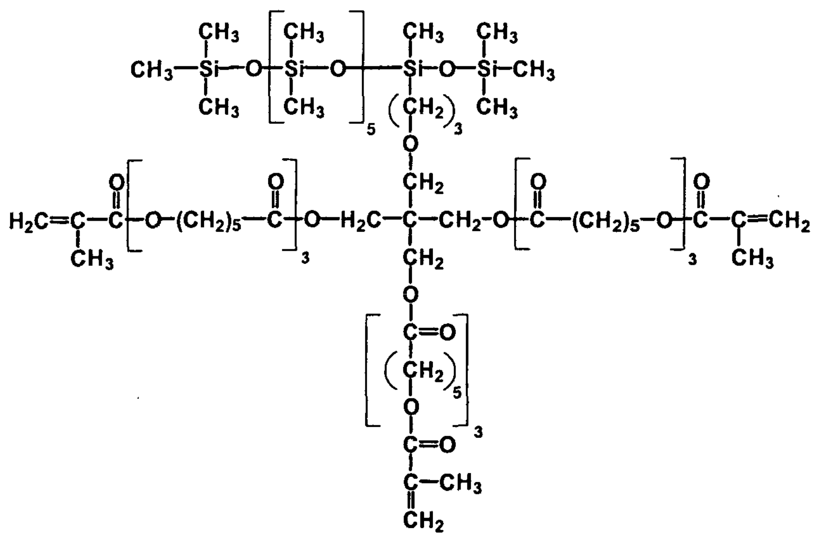

Beispiele für nicht erfindungsgemäße mit Polyester-modifizierten Polysiloxanen sind Produkte mit den folgenden, durchschnittlichen Strukturen:

Vergleich 1

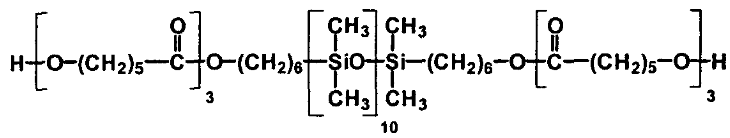

Vergleich 2

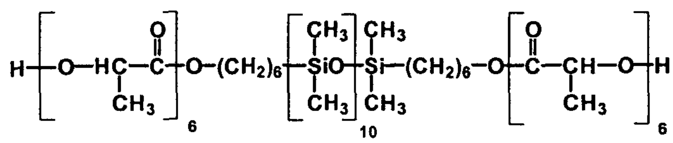

Vergleich 3

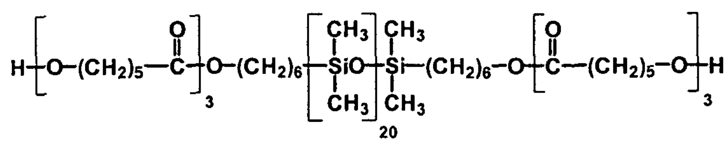

Vergleich 4

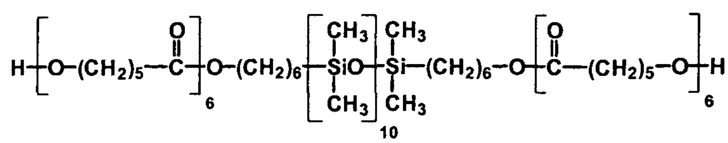

Vergleich 5

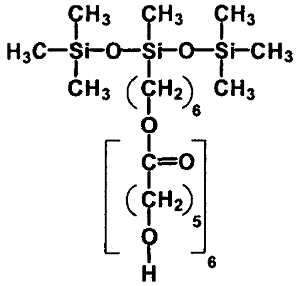

Vergleich 6

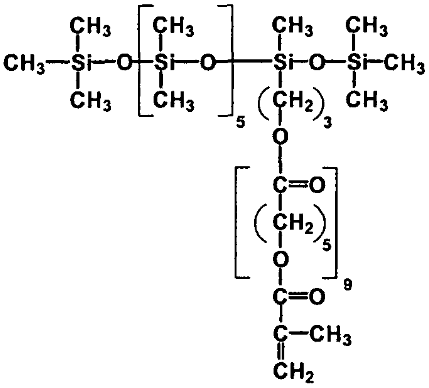

Der Vergleich der Schmelzbereiche zwischen erfindungsgemäßen und nicht erfindungsgemäßen Verbindungen wird jeweils zwischen Verbindungen mit gleichem Siloxangerüst und gleicher relativer molarer Menge Polyester geführt.

Tabelle 1:

| Verbindung | Schmelzbereich |
|---|---|
| Verbindung 1 | flüssig, 1.800 mPas (25 °C) |
| Vergleich 1 | fest, 30 bis 35 °C |
| Verbindung 2 | flüssig, 17.400 mPas (25 °C) |
| Vergleich 2 | fest-pastös, 28 bis 33 °C |
| Verbindung 3 | flüssig, 3.500 mPas (25 °C) |
| Vergleich 3 | fest, 31 bis 35 °C |
| Verbindung 4 | flüssig, 14.740 mPas (25 °C) |
| Vergleich 4 | fest, 42 bis 48 °C |
| Verbindung 5 | pastös, 196.000 mPas (25 °C) |
| Vergleich 5 | fest, 34 bis 38 °C |

Tabelle 1: (fortgesetzt)

| Verbindung | Schmelzbereich |
|---|---|
| Verbindung 6 | fest-pastös, 28 bis 32 °C |
| Vergleich 6 | fest, 35 bis 40 °C |

Wie aus der vorhergehenden Tabelle 1 ersichtlich ist, stellen einige Verbindungen bei Raumtemperatur Flüssigkeiten dar, die lösemittelfrei vom Anwender bequem gehandhabt werden können. Bei anderen ist der Schmelzbereich knapp oberhalb der Raumtemperatur, so dass sie durch gelindes erwärmen flüssig werden.

Die erfindungsgemäßen Polyester-modifizierten Polysiloxane zeichnen sich durch ihre universelle Anwendbarkeit ohne Mitverwendung von Lösemitteln aus.

Die erfindungsgemäßen Polyester-modifizierten Polysiloxane können mit Vorteil als Gleit-, Netz-, Verlauf- und/oder Releaseadditive in Beschichtungs-, Druckfarben- und/oder Drucklackformulierung eingesetzt werden.

**Patentansprüche**

1. Polyester-modifizierte Polysiloxane der allgemeinen Formel (I)

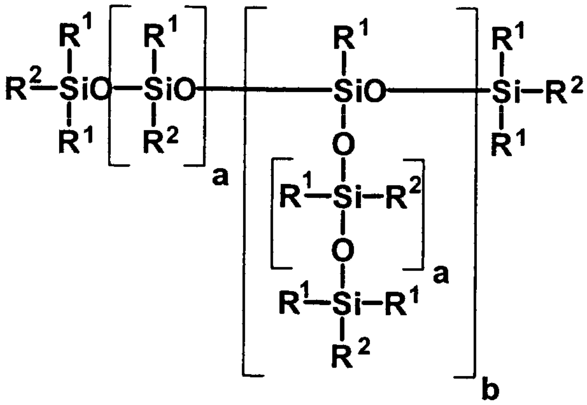

(I)

worin

$R^1$ im Molekül gleich oder verschieden ist und Alkylreste mit 1 bis 4 Kohlenstoffatomen bedeutet,
$R^2$ folgende Bedeutung hat

a) Alkylreste mit 1 bis 24 Kohlenstoffatomen, gegebenenfalls substituierte Aryl- oder Aralkylreste mit bis zu 24 Kohlenstoffatomen, und/oder
b) unabhängig voneinander ein Rest der Formel

$$-C_nH_{2n}-O-R^3-(R^4)_m$$

ist, wobei

$R^3$ ein gegebenenfalls Etherbrücken enthaltender linearer, cyclischer, aromatischer und/oder verzweigter Kohlenwasserstoffrest mit 1 bis 20 Kohlenstoffatomen ist,
und
$R^4$ eine aliphatische und/oder cycloaliphatische und/oder aromatische (Poly-)estergruppe ist, die durchschnittlich mehr als eine Gruppe der Formel

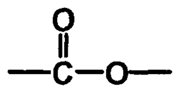 und/oder 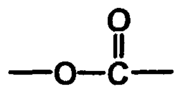

enthält,

wobei

n = 2 bis 10
m = 2 bis 10

ist,
a einen Wert von 1 bis 1000 und
b einen Wert von 0 bis 10 hat,
mit der Maßgabe, dass im durchschnittlichen Molekül mindestens ein Rest $R^2$ die Bedeutung b) hat.

**2.** Verbindungen gemäß Anspruch 1, **dadurch gekennzeichnet, dass** die Reste $R^1$ Methylreste sind.

**3.** Verbindungen gemäß Anspruch 1 und/oder 2, **dadurch gekennzeichnet, dass** die Reste $R^2$ mit der Bedeutung a) unabhängig voneinander Methylreste oder Phenylreste sind.

**4.** Verbindungen gemäß den Ansprüchen 1 bis 3, **dadurch gekennzeichnet, dass** $R^3$ einer der Reste ist aus der Gruppe

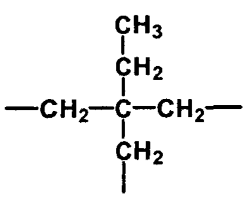 , 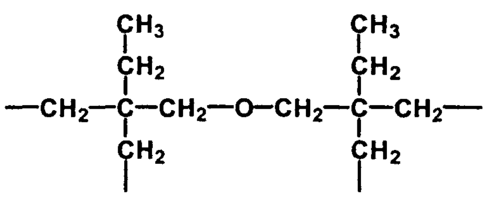 ,

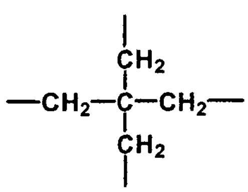 , 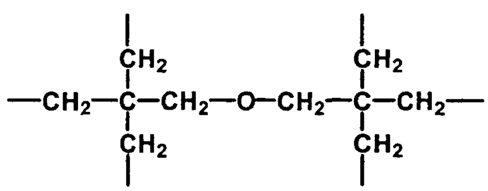 .

**5.** Verbindungen gemäß den Ansprüchen 1 bis 4, **dadurch gekennzeichnet, dass** die Reste $R^4$ Molgewichte im Bereich von 100 bis 2.000 g/mol aufweisen.

**6.** Verbindungen gemäß den Ansprüchen 1 bis 5, **dadurch gekennzeichnet, dass** die Reste $R^4$ durch ringöffnende Polymerisation von Lactonen entstanden sind.

**7.** Verbindungen gemäß Anspruch 6, **dadurch gekennzeichnet, dass** als Lactone mindestens eine Verbindung eingesetzt wird, ausgewählt aus der Gruppe β-Propiolacton, 3,6-Dimethyl-1,4-dioxan-2,5-dion, γ-Valerolacton, ε-Caprolacton, Dodecanlacton und/oder deren substituierten Varianten.

**8.** Verbindungen gemäß den Ansprüchen 1 bis 7, **dadurch gekennzeichnet, dass** die Werte von

a = 1 bis 100,

b = 0 bis 5 und
n, m unabhängig voneinander = 2 bis 3 sind.

**9.** Verbindungen gemäß den Ansprüchen 1 bis 8 der Formel

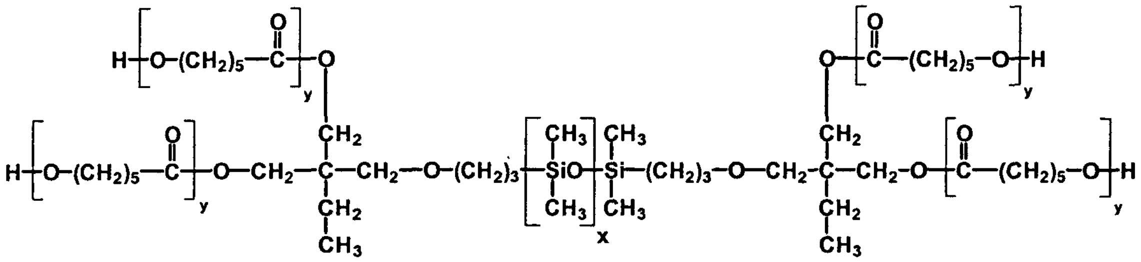

mit

x = 1 bis 100 und
y = 1,1 bis 10.

**10.** Verbindungen gemäß den Ansprüchen 1 bis 8 der Formel

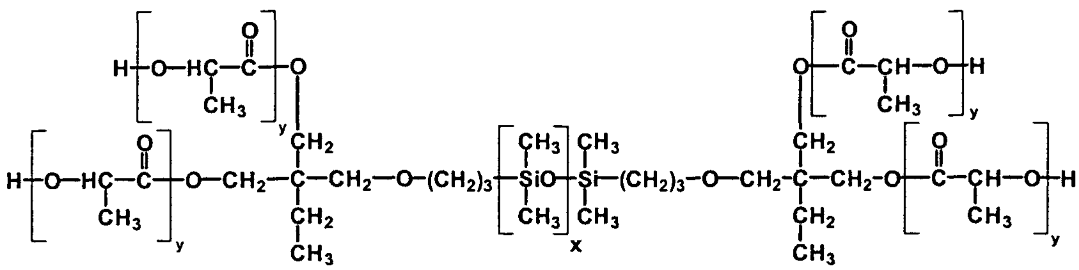

mit

x = 1 bis 100 und
y = 1,1 bis 10.

**11.** Verbindungen gemäß den Ansprüchen 1 bis 8 der Formel

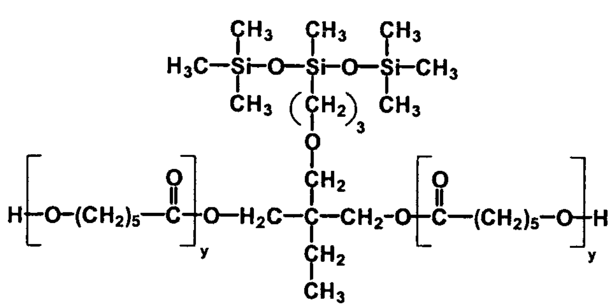

mit

y = 1,1 bis 10.

**12.** Verbindungen gemäß den Ansprüchen 1 bis 8 der Formel

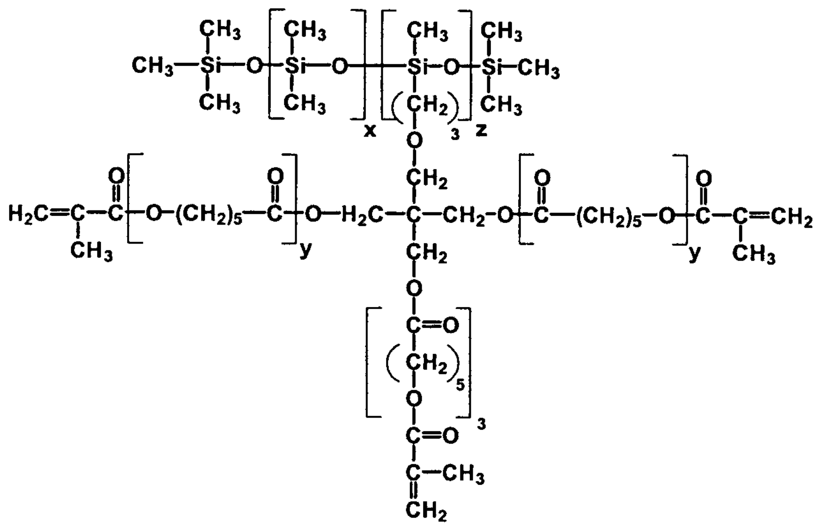

mit

x = 1 bis 100,
y = 1,1 bis 10 und
z = 1 bis 10.

**13.** Verbindungen gemäß den Ansprüchen 1 bis 8 der Formel

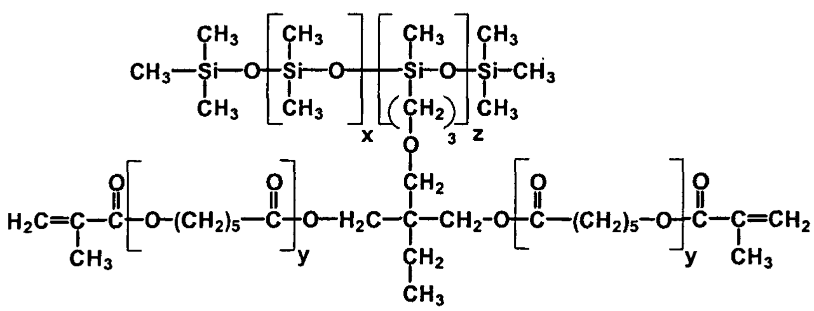

mit

x = 1 bis 100,
y = 1,1 bis 10 und
z = 1 bis 10.

**14.** Verbindungen gemäß den Ansprüchen 1 bis 8 der Formel

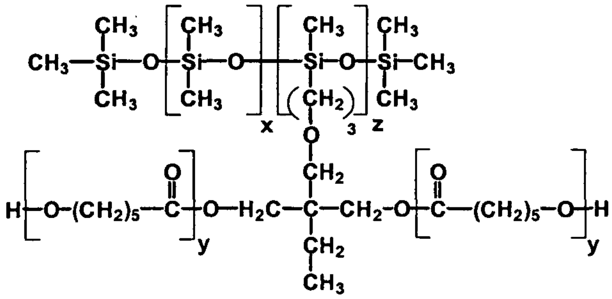

mit

x = 1 bis 100,
y = 1,1 bis 10 und
z = 1 bis 10.

**15.** Verwendung der erfindungsgemäßen Polyester-modifizierten Polysiloxane gemäß den Ansprüchen 1 bis 14 als Gleit-, Netz , Verlauf-, und/oder Releaseadditive in Beschichtungs-, Druckfarben- und/oder Drucklackformulierungen.

Europäisches Patentamt

# EUROPÄISCHER RECHERCHENBERICHT

Nummer der Anmeldung
EP 02 01 3771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 179 142 A (ONO ICHIRO ET AL) 12. Januar 1993 (1993-01-12) * Ansprüche 1-3 * * Spalte 4, Zeile 30 - Zeile 35 * * Spalte 5, Absatz 1 - Spalte 10, Absatz 1 * | 1-14 | C08G77/445 C08G63/695 |
| X | EP 0 175 092 A (BYK CHEMIE GMBH) 26. März 1986 (1986-03-26) * Ansprüche 1-17 * | 1 | |
| X | US 5 385 730 A (ICHINOHE SHOJI) 31. Januar 1995 (1995-01-31) * Ansprüche 1,3 * * Spalte 3, Zeile 64 - Spalte 4, Zeile 14 * | 1 | |
| X | EP 0 473 812 A (UKIMA COLOUR & CHEM MFG ;UKIMA CHEMICALS & COLOUR MFG C (JP)) 11. März 1992 (1992-03-11) * Ansprüche 1,2,5 * * Seite 5, Zeile 23 - Seite 6, Zeile 29 * | 1 | RECHERCHIERTE SACHGEBIETE (Int.Cl.7) |
| A | US 3 778 458 A (MOREHOUSE E) 11. Dezember 1973 (1973-12-11) * Anspruch 1 * | 1 | C08G |

Der vorliegende Recherchenbericht wurde für alle Patentansprüche erstellt

| Recherchenort | Abschlußdatum der Recherche | Prüfer |
|---|---|---|
| DEN HAAG | 15. November 2002 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 02 01 3771

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
*Diese Angaben dienen nur zur Unterrichtung und erfolgen ohne Gewähr.*

15-11-2002

| Im Recherchenbericht angeführtes Patentdokument | Datum der Veröffentlichung | Mitglied(er) der Patentfamilie | Datum der Veröffentlichung |
|---|---|---|---|
| US 5179142 A | 12-01-1993 | JP 1957441 C | 10-08-1995 |
| | | JP 3006230 A | 11-01-1991 |
| | | JP 6092481 B | 16-11-1994 |
| EP 0175092 A | 26-03-1986 | DE 3427208 A1 | 06-02-1986 |
| | | AT 57200 T | 15-10-1990 |
| | | CA 1281470 A1 | 12-03-1991 |
| | | DE 3579986 D1 | 08-11-1990 |
| | | EP 0175092 A2 | 26-03-1986 |
| | | ES 545551 D0 | 01-02-1987 |
| | | ES 8703157 A1 | 16-04-1987 |
| | | ES 556782 D0 | 16-08-1987 |
| | | ES 8707753 A1 | 01-11-1987 |
| | | ES 556832 D0 | 16-12-1987 |
| | | ES 8801342 A1 | 01-03-1988 |
| | | JP 1879459 C | 07-10-1994 |
| | | JP 6000849 B | 05-01-1994 |
| | | JP 61037843 A | 22-02-1986 |
| | | US 4613641 A | 23-09-1986 |
| US 5385730 A | 31-01-1995 | JP 2196862 A | 03-08-1990 |
| | | JP 5077707 B | 27-10-1993 |
| EP 0473812 A | 11-03-1992 | JP 2228323 A | 11-09-1990 |
| | | EP 0473812 A1 | 11-03-1992 |
| US 3778458 A | 11-12-1973 | KEINE | |

EPO FORM P0461

Für nähere Einzelheiten zu diesem Anhang : siehe Amtsblatt des Europäischen Patentamts, Nr.12/82